**Europäisches Patentamt**

(19) **European Patent Office**

**Office européen des brevets**

(11) Numéro de publication : **0 334 721 B1**

(12) # FASCICULE DE BREVET EUROPEEN

(45) Date de publication du fascicule du brevet :
02.10.91 Bulletin 91/40

(51) Int. Cl.⁵ : **E06B 3/66, B60J 1/06**

(21) Numéro de dépôt : 89400712.9

(22) Date de dépôt : 15.03.89

(54) **Vitrage isolant.**

(30) Priorité : 19.03.88 DE 3809301

(43) Date de publication de la demande :
27.09.89 Bulletin 89/39

(45) Mention de la délivrance du brevet :
02.10.91 Bulletin 91/40

(84) Etats contractants désignés :
**BE DE ES FR GB IT LU SE**

(56) Documents cités :
**EP-A- 0 060 202**
**EP-A- 0 256 563**
**EP-A- 0 256 946**
**DE-A- 2 555 384**
**DE-B- 1 197 603**

(73) Titulaire : **SAINT-GOBAIN VITRAGE INTERNATIONAL**
**18, avenue d'Alsace**
**F-92400 Courbevoie (FR)**
(84) Etats contractants désignés :
**BE ES FR GB IT LU SE**
Titulaire : **VEGLA Vereinigte Glaswerke GmbH**
**Viktoriaallee 3-5**
**W-5100 Aachen (DE)**
(84) Etats contractants désignés :
**DE**

(72) Inventeur : **Scheeren, Peter**
**Veilchenstrasse 1**
**W-5108 Monschau (DE)**
Inventeur : **Peetz, Hans-Dieter**
**Fuiheerenstrasse 12**
**W-5100 Aachen (DE)**

(74) Mandataire : **Menes, Catherine et al**
**SAINT-GOBAIN RECHERCHE 39, Quai Lucien Lefranc**
**F-93300 Aubervilliers (FR)**

## Description

L'invention concerne un vitrage isolant et son procédé d'obtention, constitué de deux feuilles de verre espacées par une lame d'air intercalaire et assemblées près de leurs bords par un ensemble de deux joints d'étanchéité réalisés dans des matières plastiques différentes. L'invention s'applique notamment à la réalisation de vitrages isolants pour véhicules automobiles ou tout autre support fréquemment sujet à des vibrations.

Les vitrages isolants les plus connus comportent deux feuilles de verre espacées par un cadre entretoise rigide souvent formé par des profilés métalliques creux remplis d'un agent desséchant pour absorber l'humidité de la lame d'air intercalaire. Ce cadre entretoise et les deux feuilles de verre délimitent une gorge périphérique externe dans laquelle on injecte une matière plastique formant un joint étanche par exemple du type polysulfure.

Il est aussi connu des brevets DE-2555383 et DE-2555384 des vitrages isolants où le cadre entretoise rigide est remplacé par un cordon en matière plastique, par exemple du type caoutchouc butyl constituant lui-même un premier joint d'étanchéité. Ce cordon d'étanchéité intérieur joue le rôle d'espaceur au moins tant que le vitrage n'est pas totalement achevé, c'est-à-dire au moins tant que le joint périphérique extérieur n'est pas entièrement polymérisé. Il doit dont être parfaitement calibré et pour cela est produit par une extrudeuse. Dans ce cas, l'agent desséchant est contenu directement dans la matière plastique extrudée formant le cordon.

La souplesse du cordon au moment de son extrusion convient particulièrement bien à la production de vitrages isolants en forme, tels des vitres bombées de véhicules automobiles. Les vitrages isolants automobiles nécessitent de plus des lames d'air intercalaires de faibles épaisseurs convenant le mieux à ce type de double-vitrage.

Toutefois, on a constaté que lorsqu'un tel vitrage isolant est placé dans des conditions particulièrement difficiles et subit de façon répétée des vibrations, chocs ou variations rapides de pression dans la lame d'air intercalaire, il se produit à la longue une séparation du cordon interne et du joint périphérique externe, le long du bord supérieur du vitrage. De telles conditions sont exceptionnelles pour un vitrage de bâtiment mais sont au contraire la règle lorsque le vitrage est monté sur un véhicule automobile en circulation. Des variations de pression importantes sont observées notamment lorsque le véhicule circule dans une zone de montagnes. La séparation observée est due à une moindre adhésivité sur le verre du cordon intérieur : lorsque le cordon commence à se décoller légèrement du verre sur le bord supérieur du vitrage, il ne tient plus qu'en étant suspendu au joint périphérique externe. De fortes sollicitations peuvent affaiblir la liaison entre le joint externe et le cordon interne, de sorte que le cordon a tendance à s'affaisser. Même si l'étanchéité du vitrage isolant n'en est pas affectée, ce phénomène est particulièrement gênant dans la mesure où le cordon en principe masqué par l'encadrement de la fenêtre devient alors visible, laissant croire à l'usure totale du vitrage.

L'invention a pour but un vitrage isolant sans cadre entretoise rigide métallique dont les joints d'étanchéité ne se séparent pas même lorsque le vitrage est soumis à des sollicitations multiples telles que celles subies dans un véhicule automobile en circulation.

Le vitrage isolant selon l'invention est constitué de deux feuilles de verre espacées par une lame d'air intercalaire et assemblées par un ensemble de deux joints d'étanchéité en matière plastique, le joint intérieur étant extrudé sous forme de cordon et le joint périphérique reliant les deux feuilles de verre en comblant tout ou partie de la gorge délimitée par lesdites feuilles de verre et le cordon. Selon l'invention et afin d'obtenir un ancrage réciproque des deux joints, le cordon comporte sur sa face en contact avec le joint périphérique une excroissance et/ou une rainure.

Le joint périphérique — dont la consistance au moment de son injection dans la gorge périphérique varie suivant les produits utilisés d'un état franchement liquide à un état plus visqueux voisin de celui de la mélasse — emplit les rainures ou entoure les excroissances du cordon. L'adhésivité du joint périphérique sur le verre est très grande et non détériorée par des sollicitations répétées du type vibration ou du type dilatation-rétraction de la lame d'air intercalaire en raison d'un déséquilibre des pressions gazeuses. On obtient ainsi un bon ancrage du cordon qui reste en place même lorsqu'il n'adhère plus parfaitement au verre et n'est pas soutenu comme c'est le cas sur le bord supérieur du vitrage.

Un tel vitrage isolant peut être utilisé notamment sur des emplacements soumis de façon continuelle ou répétée à des vibrations importantes ou autres sollicitations, notamment dans des véhicules automobiles, trains ou autres, ou éventuellement dans des vitrages de bâtiments.

Pour l'obtention d'un tel vitrage isolant, on peut utiliser une extrudeuse dont la buse a une tête d'extrusion opposée à la direction de déplacement de la buse positionnée à la verticale de la feuille de verre et déplacée parallèlement aux bords de celle-ci. La tête d'extrusion comporte un évidement qui lui confère exactement la forme souhaitée à la section du cordon qui présente ainsi une saillie d'ancrage. Le joint périphérique est injecté tout autour du vitrage après la dépose de la seconde feuille de verre.

D'autres détails et caractéristiques avantageuses de l'invention sont décrites ci-après en référence aux dessins annexés qui représentent :

• **figure 1** : un double vitrage isolant bombé pour véhicule automobile selon l'état de l'art,

• **figure 2** : une vue en coupe selon la ligne II-II de la figure 1,

• **figure 3** : une vue analogue à la figure 1 pour un vitrage isolant selon l'invention,

• **figure 4** : un schéma illustrant l'extrusion d'un cordon à saillie d'ancrage.

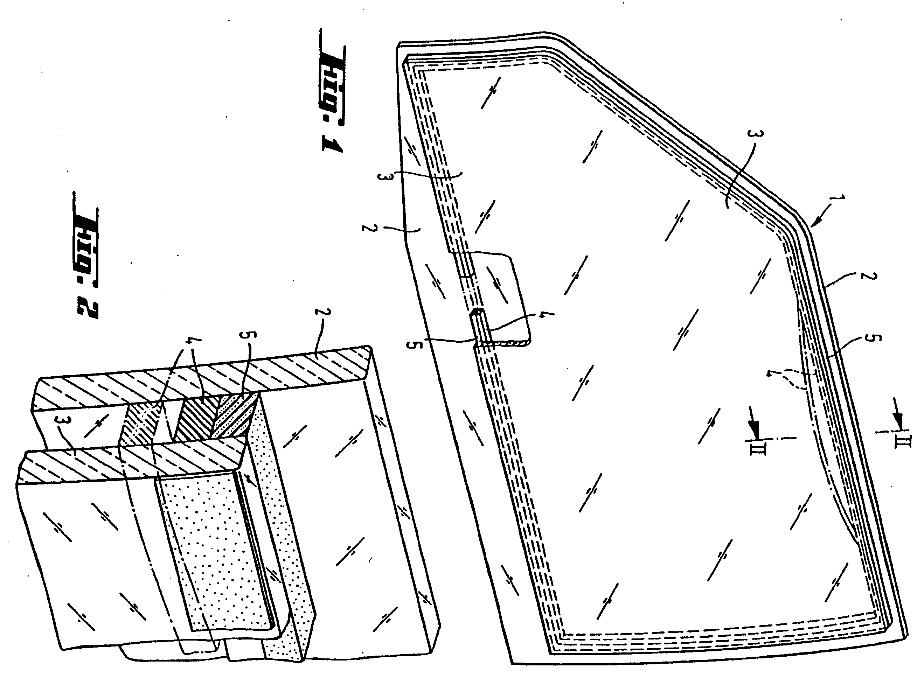

La figure 1 montre dans une vue d'ensemble un carreau bombé 1 pour une porte latérale d'une automobile avec vitrage isolant. Pour un meilleur coefficient de pénétration dans l'air du véhicule, on prévoit un montage affleurant laissant une bonne continuité entre la carrosserie et le vitrage. Pour ce faire, le vitrage isolant 1 est constitué par deux feuilles de verre 2, 3 de dimensions différentes, seule la plus grande des feuilles (2) étant maintenue par l'encadrement associé à la carrosserie.

Un cordon 4 à base de caoutchouc butyl sert de cadre espaceur entre les feuilles 2 et 3. Ce cordon est obtenu par extrusion et dépose simultanée sur une des feuilles bombées. Le caoutchouc butyl contient en quantité adéquate un agent desséchant pour absorber l'humidité de la lame d'air intercalaire et éviter les phénomènes de condensation et par conséquence d'embuage. Après l'application du cordon 4 en caoutchouc butyl, on pose la seconde feuille de verre sur le cadre ainsi réalisé puis on presse légèrement pour une bonne étanchéité. On définit ainsi une gorge périphérique qui est ensuite comblée par injection du second joint 5 par exemple en polysulfure du type Thiokol (marque déposée).

De façon classique, le cordon intérieur 4 est extrudé au moyen d'une buse en mouvement relatif par rapport au verre et définissant un cordon à section rectangulaire ou légèrement arrondie. En raison de la nécessite d'un bon calibrage de ce cordon (afin d'obtenir l'épaisseur de lame d'air désirée), on doit utiliser pour celui-ci une matière à forte viscosité comme du caoutchouc butyl et/ou à base de polyisobutylène. En contrepartie de la bonne stabilité de forme, une telle matière plastique présente à l'égard du verre une adhésivité moindre. Sans conséquence pour un vitrage isolant placé dans des conditions classiques d'un vitrage bâtiment, cette moindre adhésivité se traduit lorsque le vitrage est soumis notamment à des vibrations par un décollage du cordon adhérant au verre. A la longue, le cordon 4 n'est donc plus tenu que par le joint périphérique 5, de sorte que le long du bord supérieur du vitrage (là où la pesanteur contribue à l'affaissement du cordon), on peut observer un début de séparation du cordon 4 et du joint périphérique 5 dès que les forces de liaison qui les unissent sont compensées par les forces tendant à l'affaissement du cordon.

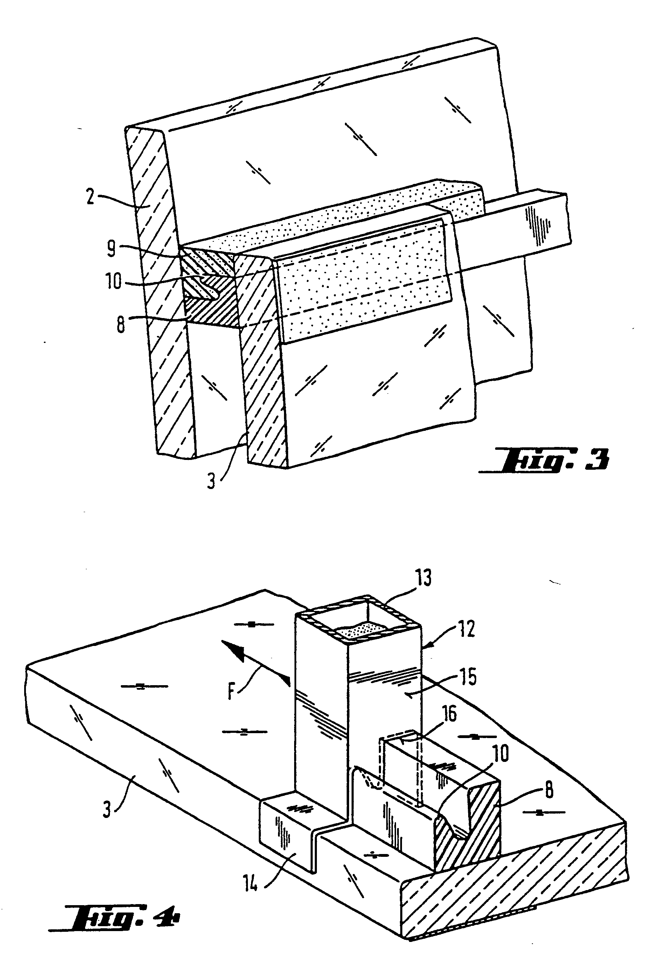

Le joint périphérique 5 restant lui correctement positionné, l'étanchéité du vitrage n'en est pas pour autant affectée. Toutefois le cordon 4 — initialement masqué par l'encadrement et/ou une couche d'émail comme montré aux figures 1 et 2 — devient alors visible et baille comme figuré en traits discontinus, avec un effet inesthétique certain.

Ce problème technique est solutionné par un vitrage isolant faisant l'objet de la présente invention et représenté en figure 3. Le cordon intérieur 8 a ici son côté extérieur — en contact avec le joint périphérique 9 — profilé d'une manière telle que l'on forme des contre-dépouilles à l'arrière du joint 9. Peut convenir toute configuration du cordon 8 conduisant à la formation d'une saillie 10, dans laquelle vient s'ancrer mécaniquement le joint périphérique. A une excroissance peut ainsi correspondre une rainure pour un assemblage du type tenon et mortaise.

Pour l'obtention d'un cordon profilé, on procède par exemple par extrusion comme schématisé à la figure 4. L'extrudeuse 12 comporte un conduit vertical d'alimentation parallèlépipédique 13 reposant par une de ses extrémités sur la feuille de verre 3 et maintenu correctement positionné par rapport aux bords de celle-ci par un guide 14. La face 15 du conduit 13, opposée à la direction de déplacement de la buse relativement au verre (schématisée par la flèche F) comporte un évidement 16 qui correspond exactement à la section du cordon 8 que l'on désire extrudé. Ainsi, lorsque l'extrudeuse est correctement alimentée en caoutchouc butyl avec la pression nécessaire, en déplaçant la buse dans le sens de la flèche F, on dépose un cordon 8 parfaitement calibré avec ici une saillie d'ancrage 10.

## Revendications

1. Vitrage isolant (1) constitué de deux feuilles de verre (2, 3) espacées par une lame d'air intercalaire et assemblées par un ensemble de deux joints d'étanchéité en matière plastique (8, 9), le joint intérieur (8) étant extrudé sous forme de cordon et le joint périphérique (9) reliant les deux feuilles de verre en comblant tout ou partie de la gorge délimitée par lesdites feuilles de verre (2, 3) et le cordon (8), **caractérisé en ce que** le cordon (8) comporte sur sa face en contact avec le joint périphérique (9) une excroissance et/ou une rainure pour un ancrage réciproque des deux joints.

2. Vitrage isolant (1) selon la revendication 1, **caractérisé en ce que** le cordon (8) est en caoutchouc butyl contenant un agent desséchant et le joint périphérique (9) en polysulfure.

3. Vitrage isolant (1) selon la revendication 1 ou 2, **caractérisé en ce que** les feuilles de verre (2, 3) ont chacune une épaisseur comprise entre 2 et 3 mm et que la lame d'air intercalaire a une épaisseur comprise entre 2 et 5 mm.

4. Vitrage isolant (1) selon l'une des revendications précédentes, **caractérisé en ce que** les feuilles de verre (2, 3) sont bombées.

5. Application du vitrage isolant (1) selon la revendication 1 à 4 comme vitrage de véhicules automobiles.

6. Procédé d'obtention du vitrage isolant (1) selon l'une des revendications 1 à 4 selon lequel le cordon (8) est formé et déposé près des bords sur la feuille de verre (3) par une buse d'extrusion (12) avec une tête latérale, positionnée à la verticale de la feuille de verre (3) et déplacée parallèlement aux bords de la feuille (3), **caractérisé en ce que** la tête (16) de la buse (12) comporte un évidement (16) pour conférer à la section du cordon la forme souhaitée.

**Patentansprüche**

1. Isolierglasscheibe (1) aus zwei durch eine Luftzwischenschicht voneinander getrennten Einzelglasscheiben (2, 3), die durch zwei Dichtverbindungen aus Kunststoff (8, 9) miteinander verbunden sind, von denen die innere Dichtverbindung (8) in Form eines Stranges extrudiert ist und die äußere Dichtverbindung (9) die beiden Einzelglasscheiben miteinander verbindet, indem sie die von den Glasscheiben (2, 3) und dem Strang (8) gebildete Hohlkehle ganz oder teilweise ausfüllt, **dadurch gekennzeichnet,** daß der Strang (8) auf der mit der äußeren Dichtverbindung (9) in Kontakt stehenden Fläche einen Vorsprung und/oder eine Nut für die gegenseitige Verankerung der beiden Dichtverbindungen umfaßt.

2. Isolierglasscheibe (1) nach Anspruch 1, dadurch gekennzeichnet, daß der Strang (8) aus einem ein feuchtigkeitsabsorbierendes Mittel enthaltendem Butylkautschuk, und die äußere Dichtverbindung (9) aus Polysulfid besteht.

3. Isolierglasscheibe (1) nach Anspruch 1 oder 2, dadurch gekennzeichnet, daß die Glasscheiben (2, 3) jeweils eine Dicke von 2 bis 3 mm, und die Luftzwischenschicht eine Dicke von 2 bis 5 mm aufweisen.

4. Isolierglasscheibe (1) nach einem der voraufgehenden Ansprüche, dadurch gekennzeichnet, daß die Glasscheiben (2, 3) gebogen sind.

5. Verwendung der Isolierglasscheibe (1) nach Anspruch 1 bis 4 als Verglasung von Automobilen.

6. Verfahren zur Herstellung der Isolierglasscheibe (1) nach einem der Ansprüche 1 bis 4, bei dem der Strang (8) durch eine senkrecht auf die Glasscheibe (3) aufgesetzte und parallel zu den Kanten der Glasscheibe (3) geführte Extruderdüse (12) mit einem seitlichen Kopf gebildet und nahe den Kanten auf die Glasscheibe (3) aufgelegt wird, dadurch gekennzeichnet, daß der Kopf (16) der Düse (12) eine Ausnehmung (16) umfaßt, um dem Querschnitt des Stranges die gewünschte Form zu erteilen.

**Claims**

1. Insulating pane (1), composed of two glass sheets (2, 3) spaced apart by an intermediate layer of air and joined together by an assembly of two seals of plastics material (8, 9), the inner seal (8) being extruded in the form of a cord and the peripheral seal (9) connecting the two glass sheets together while filling the whole or a part of the groove defined by said glass sheets (2, 3) and the cord (8), characterized in that the cord (8) comprises, on its face in contact with the peripheral seal (9), a projection and/or a groove for anchoring the two seals together.

2. Insulating pane (1) according to Claim 1, characterized in that the cord (8) is of butyl rubber containing a desiccant and the peripheral seal (9) is of polysulphide.

3. Insulating pane (1) according to Claim 1 or 2, characterized in that the glass sheets (2, 3) each have a thickness of from 2 to 3 mm and in that the intermediate layer of air has a thickness of from 2 to 5 mm.

4. Insulating pane (1) according to one of the preceding Claims, characterized in that the glass sheets (2, 3) are curved.

5. Application of the insulating pane (1) according to Claims 1 to 4 as glazing for automobile vehicles.

6. Process for the production of the insulating pane (1) according to one of Claims 1 to 4, according to which the cord (8) is formed and deposited near the edges onto the glass sheet (3) by an extrusion nozzle (12) having a lateral head, positioned vertically above the glass sheet (3) and displaced parallel to the edges of the sheet (3), characterized in that the head (16) of the nozzle (12) comprises a recess (16) for giving the desired shape to the cross-section of the cord.

**Fig. 1**

**Fig. 2**

**Fig. 3**

**Fig. 4**